# EUROPEAN PATENT APPLICATION

(11) **EP 4 056 903 A1**
(43) Date of publication of application: **14.09.2022**
(21) Application number: 22160593.4
(22) Date of filing: 07.03.2022
(51) Int. Cl.: F23R 3/28

(54) **HYDROGEN-FUELED COMBUSTOR FOR GAS TURBINES**

(30) Priority: 07.03.2021 DE 102021105441
(71) Applicant: CPS-Holding Limited, 107950 Abu Dhabi (AE)
(72) Inventor: Toqan, Majed, 107950 Abu Dhabi (AE); Abdulsater, Hassan, Tempe, 85281 (US)
(74) Representative: Westphal, Mussgnug & Partner Patentanwälte mbB

(57) **Abstract**

The present disclosure is drawn to a gas turbine whereby hydrogen is used as a primary fuel to generate the energy needed to drive the rotation of the turbine via a set of hydrogen and air nozzles.

## Description

Global interest in reducing CO₂ concentrations in the atmosphere has increased the need to develop technologies that are able to burn hydrogen-based fuels in gas turbines in order to minimize CO₂ emissions. The replacement of the current fossil fuels with hydrogen-based fuels raises a large technical challenge in how to manage the combustion process in a safe way while minimizing NOx emission levels. Several big challenges need to be tackled:
- Minimizing high peak flame temperatures in order to minimize NOx formation as the adiabatic flame temperature from burning hydrogen is 200K higher than methane.
- The flame speed of hydrogen is nearly 10 times higher than methane.
- The ignition delay time of hydrogen at 17 bars and 1000k is more than 7 times faster than methane.
- Due to the fast ignition of hydrogen, any new design has to eliminate the potential of a flashback.
- Additionally, the new design has to prevent the formation of thermo-acoustic oscillations within the combustor.

Mastering and resolving the above technical issues can lead to the spread of using Hydrogen based fuels in gas turbines.

The main objectives of the current work are to develop a new combustor design for 100% hydrogen-based firing that can achieve the following:
- Safe operation of the gas turbine across all operating loads
- Elimination the possibility of flashback in the combustor using hydrogen as the base fuel
- Elimination and/or reduction of thermo-acoustic oscillations within the combustor
- Minimize NOx emission levels from the combustor Relevance and Outcome/Impacts

The major benefit from overcoming and resolving the issues faced from hydrogen combustion can lead to a major expansion of using hydrogen-based fuels for power generation as well as reducing CO₂ concentration levels in the atmosphere.

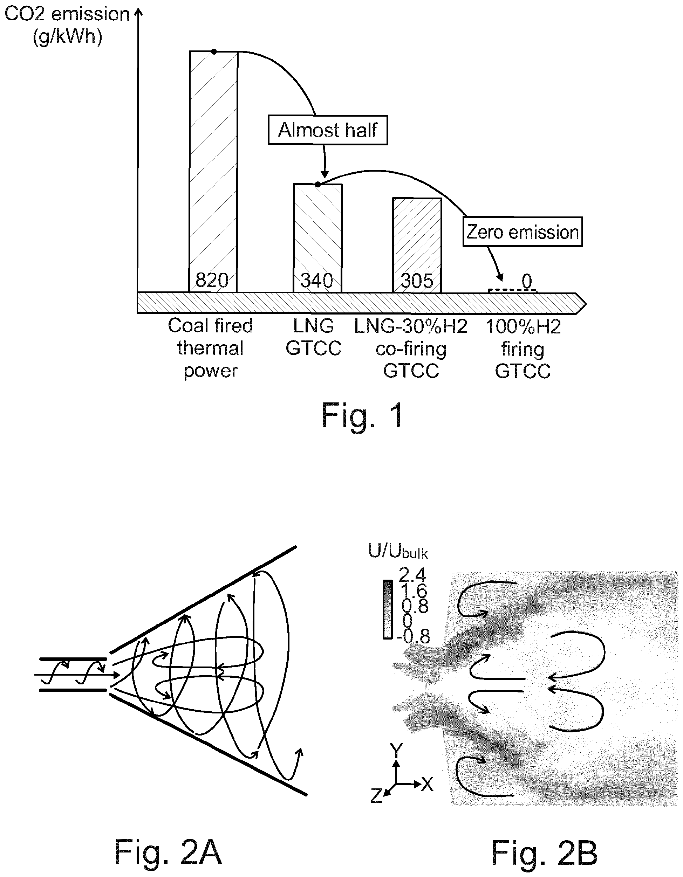

Gasification of coal and reforming the syngas to produce mainly hydrogen as a primary fuel in gas turbines will lead to a major reduction in CO₂ emissions. A study by MHPS shows a major drop in CO₂ emissions as a result of the replacement of conventional fuels with hydrogen firing [1]. Currently, major OEMs have managed successfully on an experimental basis to dope natural gas up to 90% hydrogen in gas turbines. 100% firing of hydrogen in gas turbines is at least 10 years away based on the current state of the art technologies. There is a need for an innovative new radical design that can achieve the objective of 100% firing. Figure 1 shows the decrease in CO₂ emissions as a result of firing with H2 blends in the Fuel (Source: MHPS).

### Combustor Technology Concept

Nowadays, gas turbine combustion chambers use swirling flows to stabilize their flames. Air and fuel enter the combustion chambers through individual burners that induce a rotating trajectory to the combustion educts (see Figure 2). This rotational flow behavior generates hot recirculation zones in front of the burner exit, which act as ignition source for the fresh reactants. This mechanism enables to stabilize flames in high energy to volume ratio devices.

One important characteristic of modern gas turbine burners is the fact that their flames need to operate with high excess air levels in order to mitigate pollutant emissions associated with high temperature spots (nitrogen oxide emissions). This measure can create stability problems especially when the conditions inside the combustion chamber become too lean to sustain stable flames and complete combustion.

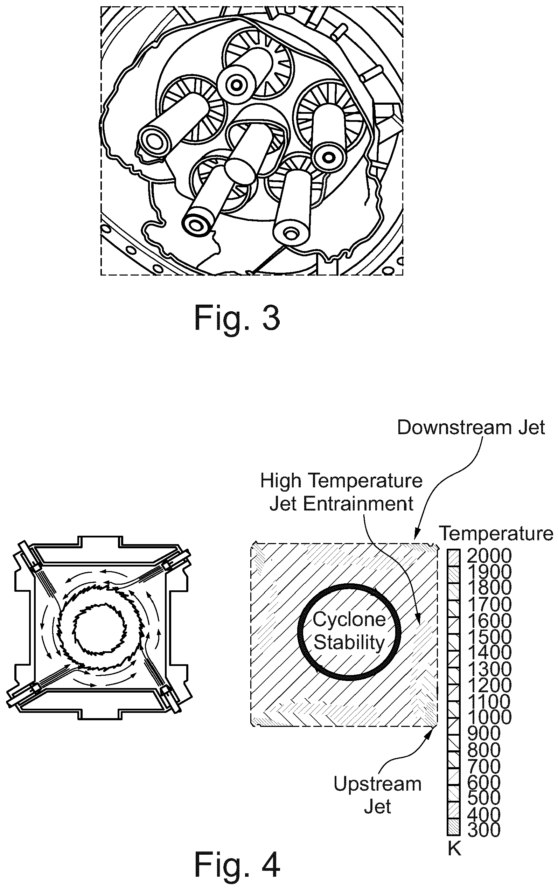

Current gas turbines use premix combustion to achieve low NOx emissions using natural gas as the base fuel. In the process, thermo-acoustic oscillations and flame flashback into the burners may arise and have to be managed carefully in order to avoid premature combustor failures. The example below shows such premature failure due to flashback and thermo-acoustic oscillations. Figure 3 shows a premature burner flashback failure in a premix combustor firing natural gas.

Gas turbine machines running at high pressure ratios are prone to higher flashback tendency due to the higher combustion air temperatures at the combustor inlet. This phenomenon increases significantly if hydrogen is used as a fuel and the mixing between the fuel and the air is not homogenous. In addition, thermo-acoustic instabilities might be generated due to flame ignition and combustion instabilities resulting in high combustion pulsations and early failure of the engine. To avoid such drawbacks associated with swirling burners, we propose to use a different flame stabilization mechanism based on a principle successfully implemented in atmospheric pressure large utility boilers. In these devices, air and fuel enter the combustion chambers through plane jets arranged tangentially (see Figure 4 which shows a tangential fire flame stabilization mechanism). This arrangement generates an overall tornado flow inside the combustion chamber; where the single burner flames do not stabilize individually but they cross ignite with each other. Moreover, highly swirling flow next to the nozzle outlet is not essential as the stabilization comes from the entrainment of the high temperature upstream jet leading to a cyclic stabilization mechanism. We believe that this stabilization strategy can be applied to gas turbines combustors burning hydrogen with the benefits of increasing mixing between the air and fuel, and in turn to better combustion at lean conditions and lower peak temperatures and in turn lower nitrogen oxide emissions.

The above concept is being applied using natural gas as a fuel and the current results indicate that this new technology has major advantages over conventional designs when applied to hydrogen-based fuels.

The main benefits are the following:
- Rapid mixing within the combustion chamber resulting in a drop in peak flame temperatures and lower NOₓ emissions
- Higher operational flexibility especially at part load due to the fact that individual fuel air streams are stabilized by the high temperature upstream fuel/air streams/flames.
- Longer life for key engine components (turbine parts) due to much better uniform temperature distribution at combustor exit.
- Handling of non-standard fuels as a result of combustion stabilization due the high stability of the primary combustor vortex/cyclone.
- Better part-load performance due to much better stability at low loads; no need for diffusion or mixed operation (diffusion/premix) at low loads.

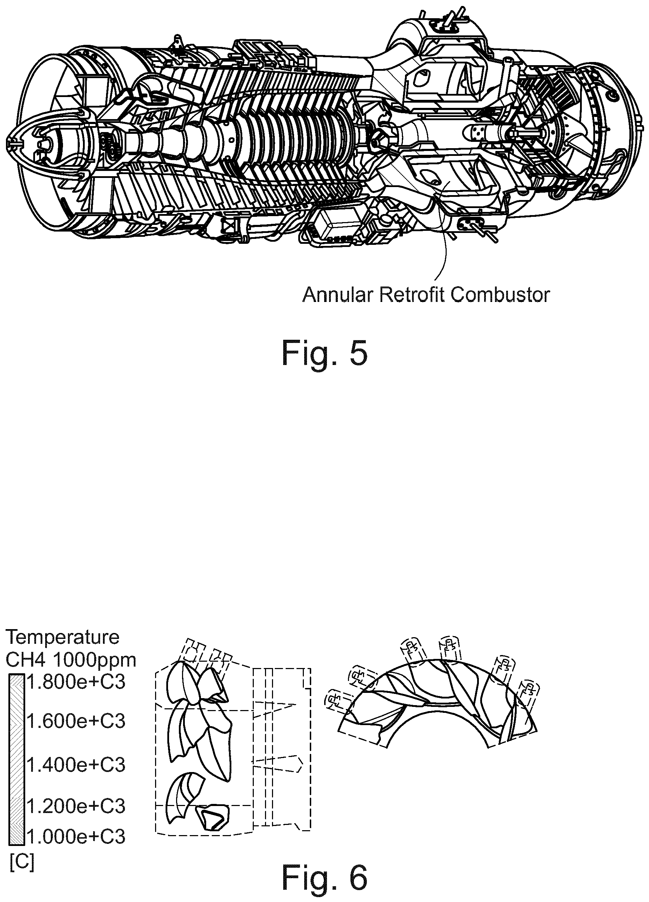

One configuration of the new design which is being applied on an aero engine using a conventional fuel is shown in Figure 5 (advanced T-Fire combustor applied as a retrofit on an aero engine). The new design is as well applicable to can-annular and silo type combustors. A representation of the flame structure with the new combustion system using natural gas is shown in Figure 6 (flame structure in CFD simulations of natural gas T-fire combustor).

### CPS-Owned Related Intellectual Property

The combustion technology has been studied and analyzed extensively for gas turbine engines running on conventional fuels by CPS engineers. In this study, CPS proposes to expand the existing technology to be employed for non-conventional fuels such as hydrogen. Upon success, this program will be able to deliver a new combustor design able to power a gas turbine engine with 100% hydrogen-firing ability leading to higher efficiency and environmentally friendly operation. CPS's past work on the innovative combustion technology employing tangential-firing components for gas turbine combustors has resulted in five US-patent applications being awarded in recent years as listed in Table 1 below and which are incorporated by reference.

**Table 1: CPS Patents on Tangentially Fired Combustor Technology (all patent numbers refer to US-patents)**

| | |
|---|---|
| Patent number: 9181812 | Can-annular combustor with premixed tangential fuel-air nozzles for use on gas turbine engines |
| Abstract: A combustion device used in gas turbine engines to produce propulsion or rotate a shaft for power generation includes a can-annular combustor with a system of fuel and air inlet passages and nozzles that results in an optimal combustion environment of premixed fuel and air. The fuel-air inlets are placed at various longitudinal locations and circumferentially distributed, and direct the flow tangentially or nearly tangent to the can liner. The combustion device provides effective mixing of fuel and air, creates an environment for combustion that reduces pollutant emissions, reduces the need for costly pollution control devices, enhances ignition and flame stability, reduces piloting issues, and improves vibration reduction. | |
| Patent number: 9091446 | Tangential and flameless annular combustor for use on gas turbine engines |
| Abstract: A combustion device used in gas turbine engines that produces propulsion or rotates a shaft for power generation includes an annular combustor with a system of fuel and air inlet passages and nozzles that results in a flameless combustor, such that there is not an anchored flame as in typical gas turbine combustors. The fuel and air inlets are placed at various longitudinal locations and circumferentially spaced, and take on several different configurations where some nozzles inject only air and others inject a rich fuel-air mixture. The combustion device provides an optimal mixing of fuel and air as well as creates an environment for combustion that reduces pollutant emissions reducing the need for costly pollution control devices, and enhances ignition and flame stability, reduces piloting issues and improves vibration reduction. | |
| Patent number: 9052114 | Tangential annular combustor with premixed fuel and air for use on gas turbine engines |
| Abstract: A combustion device used in gas turbine engines to produce propulsion or rotate a shaft for power generation includes an annular combustor with a system of fuel and air inlet passages and nozzles that results in a staged combustion of premixed fuel and air. The fuel and air inlets are placed at various longitudinal locations circumferentially, and can take on different configurations where all nozzles inject a fuel-air mixture or some may inject only air. The combustion device provides an optimal mixing of fuel and air, creates an environment for combustion that reduces pollutant emissions reducing the need for costly pollution control devices, enhances ignition and flame stability, reduces piloting issues, allows increased fuel flexibility, decreases the required size of the first stage nozzle guide vane (NGV), and improves vibration reduction. | |
| Patent number: 8904799 | Tangential combustor with vaneless turbine for use on gas turbine engines |
| Abstract: A combustion device used in gas turbine engines includes an annular combustor that contains the combustion process of air and fuel and then guides the hot gas products to a first stage turbine subsection of a gas turbine engine. The annular combustor has an inner/outer shell having corrugated surfaces that extend radially outward and inward across an entire hot gas stream inside the annular combustor. The corrugations twist about the engine centerline in a longitudinal direction of travel of the engine. The resulting flow path accelerates and turns the hot gas stream to conditions suitable for introduction into the first stage turbine blades, which eliminate the need for first stage turbine vanes. The annular combustor is configured with a system of fuel and air inlet passages and nozzles that results in a staged combustion of premixed fuel and air. | |
| Patent number: 8739511 | Can-annular combustor with staged and tangential fuel-air nozzles for use on gas turbine engines |
| Abstract: A combustion device used in gas turbine engines to produce propulsion or rotate a shaft for power generation includes a can-annular combustor with a system of fuel and air inlet passages and nozzles that results in an optimal combustion environment of fuel and air. Fuel, air and/or fuel-air inlets are placed at various longitudinal locations and circumferentially distributed, and direct the flow tangentially or nearly tangent to the can liner. The combustion device provides an optimal mixing of fuel and air, creates an environment for combustion that reduces pollutant emissions, reduces the need for costly pollution control devices, enhances ignition and flame stability, reduces piloting issues, and improves vibration reduction. | |

### Hydrogen Combustion in the T-Fire Combustor

Burning hydrogen in a gas turbine incorporates major challenges that need to be sorted out before the successful application of this fuel on a large scale. Some of the major challenges include the following:
- Premature combustion of the fuel in the burner assembly due to flashback.
- Thermo-acoustic pulsations due to combustion instabilities under certain operating conditions.
- Insufficient mixing between the fuel and the combustion air streams.
- High NOx emissions due the lack of mixing between the fuel and the combustion air.
- High flame speeds and in turn difficulty to control the rate of combustion of hydrogen in the combustor in high pressure machines.

In order to devise a successful strategy to burn hydrogen across a wide engine range, ignition delay times and flame speeds have to be managed across a wide range of operating conditions. As such, we need first to understand the different aspects of hydrogen combustion under a wide range of equivalence ratios and operating pressures. The section below describes the combustion behavior of hydrogen under these different conditions.

### Chemical kinetics of hydrogen combustion

The Flame Speeds and Ignition Delay Times calculations presented in this section were carried out using the commercial code Ansys Chemkin-Pro 2020. The chemical mechanism used to compute the kinetics is the GRI 3.0 mechanism which has been well-studied and validated for a wide range of conditions [8].

### Flame Speed

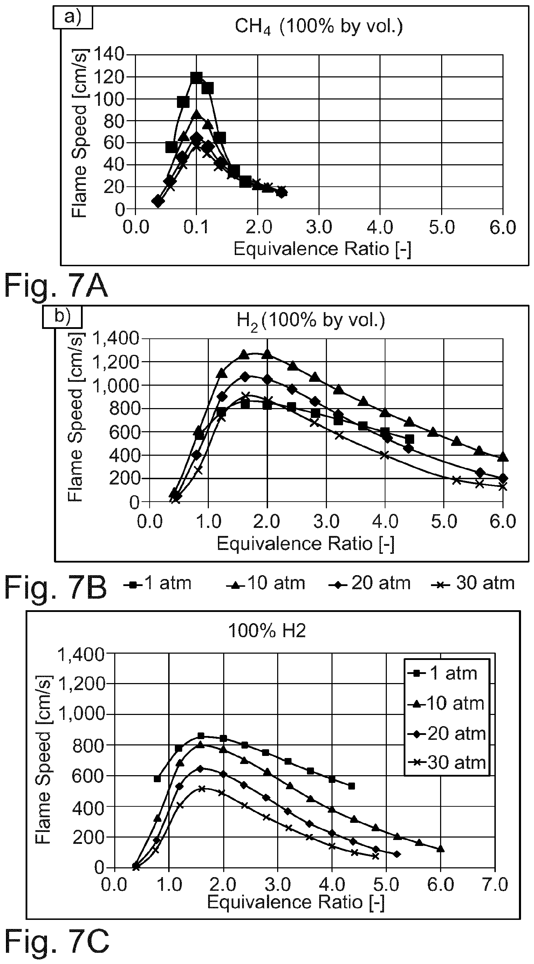

Laminar Flame Speed is a significant parameter for the characterization of flames and it is a key parameter for controlling flows in combustors. Major differences exist between methane flame speeds and hydrogen. The hydrogen flame speed is more than 10 times that of methane making hydrogen combustion difficult to control. Figure 7A and Figure 7B (Laminar Flame Speeds Calculations for a) Methane/Air mixtures b) Hydrogen/Air mixtures) show the flame speeds of hydrogen and methane at mixtures temperature of 300°C and different equivalence ratios and different pressures. The flame speed predictions presented here were computed using the flame speed module in Chemkin-Pro. Before carrying these calculations at high mixture temperatures, calculated flame speeds at low mixture temperatures were compared with experimental literature values. The calculated values were in good agreement with publications in the literature [9, 10]. The chemical mechanism used to compute the kinetics is the GRI 3.0 mechanism, which has been well-studied and validated for a wide range of conditions [8]. Furthermore, the predictions are in good agreement with publications in the literature [9, 10].

For the pure Hydrogen case (Figure 7B), the flame speeds are much higher than those for Methane even at the low end of the flame speeds spectrum. Moreover, the sharp gradients of flame speeds at low equivalence ratios, ratios applied in premix gas turbines combustors, pose a large challenge for burning hydrogen under premix lean combustion conditions. On the other hand, the gradients are much less steep under fuel rich conditions making it easier to manage the combustion process under these conditions. As a result, one possibility is to premix hydrogen with the air stream and combust it under fuel rich conditions. The fuel equivalence ratio needs to be at a level that avoids the formation of NO and other nitrogen bound species in the rich stage as well as in the lean stage that follows the rich stage.

The Flame Speeds and Ignition Delay Times calculations presented in this section were carried out using the commercial code Ansys Chemkin-Pro 2020. The chemical mechanism used to compute the kinetics is the GRI 3.0 mechanism which has been well-studied and validated for a wide range of conditions [8].

### Flame Speed

Laminar Flame Speed is a significant parameter for the characterization of flames and it is a key parameter for controlling flows in combustors. Major differences exist between methane flame speeds and hydrogen. The hydrogen flame speed is more than 10 times that of methane making hydrogen combustion difficult to control. Figure 7a and Figure 7b show the flame speeds of hydrogen and methane at mixtures temperature of 300C and different equivalence ratios and different pressures. The flame speed predictions presented here were computed using the flame speed module in Chemkin-Pro. Before carrying these calculations at high mixture temperatures, calculated flame speeds at low mixture temperatures were compared with experimental literature values. The calculated values were in good agreement with publications in the literature [9, 10]. The chemical mechanism used to compute the kinetics is the GRI 3.0 mechanism, which has been well-studied and validated for a wide range of conditions [8]. Furthermore, the predictions are in good agreement with publications in the literature [9, 10].

For the pure Hydrogen case (Figure 7b), the flame speeds are much higher than those for Methane even at the low end of the flame speeds spectrum. Moreover, the sharp gradients of flame speeds at low equivalence ratios, ratios applied in premix gas turbines combustors, pose a large challenge for burning hydrogen under premix lean combustion conditions. On the other hand, the gradients are much less steep under fuel rich conditions making it easier to manage the combustion process under these conditions. As a result, one possibility is to premix hydrogen with the air stream and combust it under fuel rich conditions. The fuel equivalence ratio needs to be at a level that avoids the formation of NO and other nitrogen bound species in the rich stage as well as in the lean stage that follows the rich stage.

### Rate of mixing between the fuel and the air mixtures

Another major difference between hydrogen and methane is the mass flowrate flow rate of hydrogen that needs to be mixed with the combustion air relative to that of methane to generate the same level of energy. The methane mass flow rate flow is three times that of hydrogen. This poses a major design challenge on how to mix the hydrogen stream with the air stream in the burner assembly and achieve high rates of mixing. An innovative concept needs to be devised in order to achieve uniform mixing between hydrogen and air and avoid the possibility of flashback within the burner assembly. Researchers in industry and academia have studied various mechanisms in order to control the challenging combustion characteristics and control the behavior of burning hydrogen for gas turbine applications. Concepts from blending hydrogen with inert gases, hydrocarbon fuels, or exhaust gas recirculation have all been explored and some extensively studied and reported by several research groups [9- 12]. The next section discussed a concept whereby hydrogen is diluted with steam in order to control the hydrogen-firing rate of mixing, ignition delay time and burning velocities.

### Control of the rate of mixing and rate of combustion of hydrogen

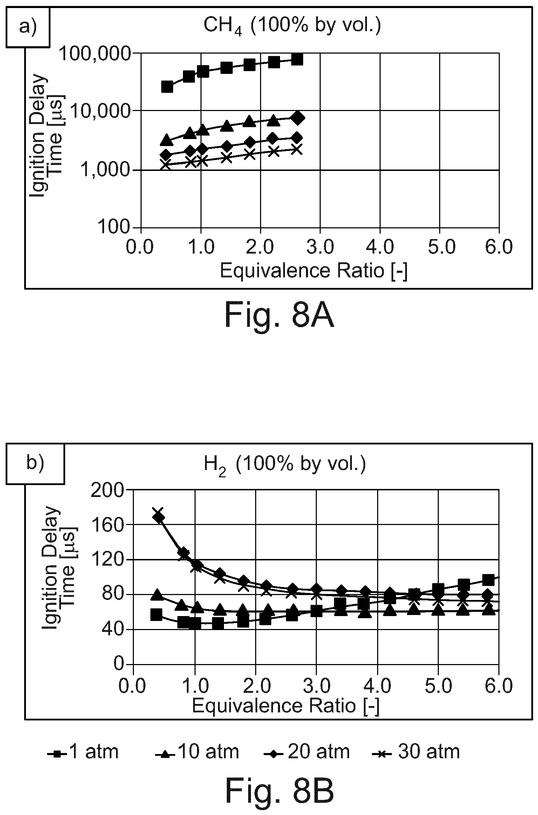

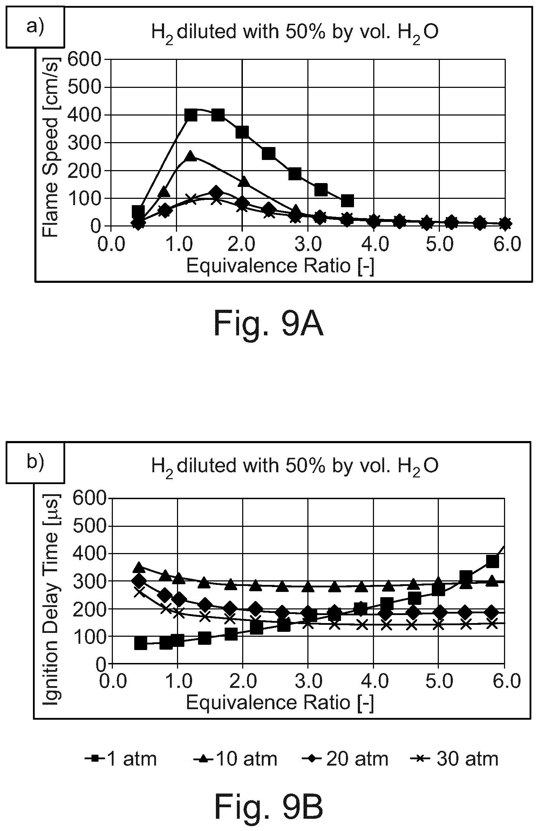

One way on how to improve the chances of mixing hydrogen with air and control its rate of combustion is to mix the hydrogen with steam prior to introducing the mixture upstream of the burner assembly. The combined stream will have a higher momentum and better chance to mix with the combustion air while reducing the chance of initiating the combustion within the burner assembly. Figure 9a shows that adding 50% steam to hydrogen can reduce the flame speeds by a factor of 4 to 5 times. For the case where the hydrogen is diluted with 50% steam, the flame speeds are comparable to those of methane (c.f. Figure 7a) specifically over higher equivalence ratios and at higher pressures. Moreover, Figure 9B shows that the ignition delay times can be increased by 4-5 times compared to the pure Hydrogen/Air mixture case (c.f. Figure 8B).

Consequently, mixing steam with hydrogen allows the hydrogen to mix with the air stream without the risk of igniting the mixture within the burner assembly.

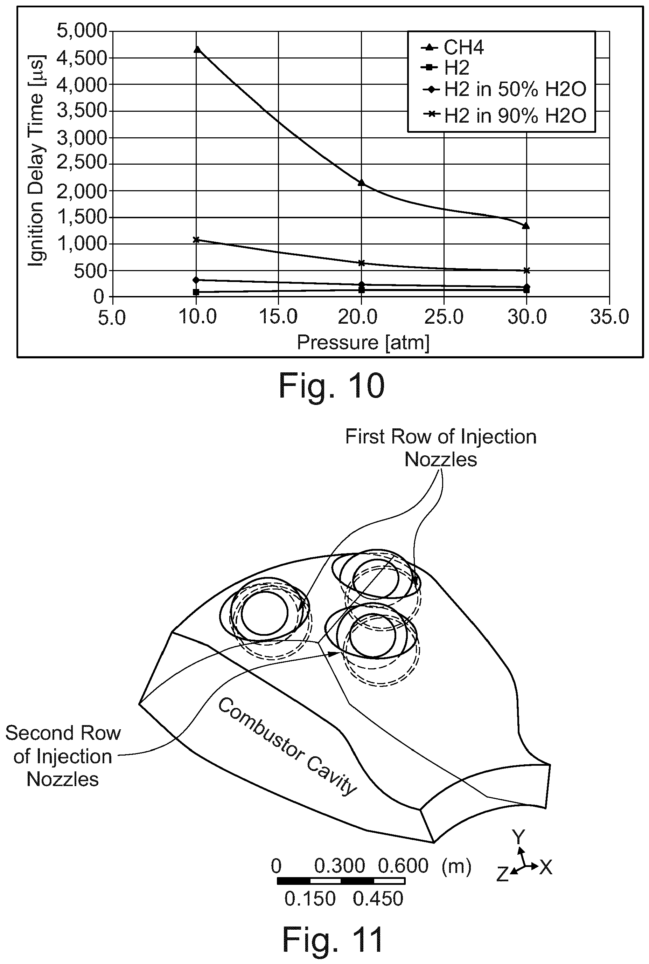

Additionally, since the equivalence ratios in the engine vary over different load ranges, the steam amount can be varied as well to match the required values needed to manage the combustion process in a safe manner and limit NOx emission levels at the different loads. It is worthwhile to note that a further increase in steam dilution can lead to a further increase the ignition delay times as shown in Figure 10. These calculations were obtained for a range of fuel/air mixtures where the fuel is pure methane, pure hydrogen and hydrogen diluted with steam at 2 different molar ratios. The conditions used for these calculations are stoichiometric (Φ = 1) with pressures ranging from 10 to 30 atm.

### Key Design Features

Two key new novel design features when applied to hydrogen firing include the following:
- Elimination the need for a large primary and secondary fuel/air swirler at the exit of the combined premix hydrogen fuel/air nozzle. Since hydrogen's flame speed is very high elimination of such swirlers will reduce the possibility of developing flashback within the fuel/air nozzle.
- The addition of steam to the hydrogen stream prior to premixing it with the air stream. Different amounts of steam will be intermixed with the hydrogen and introduced in a tangential arrangement in order to control the peak flame temperature to be followed downstream by another set of tangentially oriented air nozzles that will introduce the remaining part of the air.

The above features of the new novel design will assure lower peak flame temperatures and as such lower NOx emissions while preventing the occurrence of flashback. One representation of such a design is shown in Figure 11 below.

Two main approaches will be used to demonstrate the feasibility of a Hydrogen-fired combustor for gas turbine applications. First, 1-D and 3-D numerical simulations will be used to predict the behavior of Hydrogen flames employing predefined tangentially fired fuel/air nozzle designs. Second, a Hydrogen-steam fueled combustor rig will be utilized to validate flame stability and pollutant emissions.

Discloses is a gas turbine whereby hydrogen is used as a primary fuel to generate the energy needed to drive the rotation of the turbine via a set of hydrogen and air nozzles. In one embodiment the hydrogen is introduced into the combustor through a set of nozzles to mix with the combustion air upstream of the combustion chamber. The set of the premix nozzles of hydrogen and air has no swirlers or a set of low swirling devices. The said nozzles are oriented tangentially around the combustion chamber to generate a set vortex that mixes the streams from the set nozzles quickly and achieve very fast combustion and uniform conditions at the exit of the combustion chamber.

The tangential arrangement of said nozzles minimize combustion instabilities, thermos-acoustics instabilities and combustor pulsations. The equivalence ratio of hydrogen air can be varied from 0.5 to 3 in said nozzles. In the case where the equivalence ratio is greater than 1, a second set nozzles of combustion air are introduced down stream of said nozzles of premix hydrogen air nozzles.

The second set of air nozzles are oriented tangentially downstream of hydrogen/air nozzles. In another embodiment of this concept an additive is added to hydrogen prior to its introduction into the air stream in order to achieve a more uniform mixture of hydrogen and the air stream. In the above embodiment, the used additive is of a chemical that reduces the flame speed of hydrogen and increases the ignition delay time of hydrogen. In one embodiment, the ratio of the additive to hydrogen can be varied over the load range of the engine. In one embodiment, one option is to have lower additive/ hydrogen ratio at low loads and higher ratios at higher engine loads. In one embodiment, the additive is steam. The steam source can be from the lower end of the cycle in an embodiment where steam is generated from the waste heat released from the exhaust of the turbine. In one embodiment, the steam is source comes from the lower end of the cycle in a combined cycle power plant (CCPP) application. In another arrangement, the steam can come from an external source of steam to be supplied to the engine. In one embodiments, the added steam is used to regulate and control the peak combustion temperatures in the combustion chamber so as to minimize and reduce NOx emission levels.

### Bibliography

1. MHPS (Mitsubishi Hitachi Power Systems), April 26, 2018, The hydrogen gas turbine, successfully fired with a 30% fuel mix, is a major step towards a carbon-free society
2. Andrea Gruber & James Dawson, TCCS-10, Trondheim, June 18-19 2019, Carbon-free firing of state-of-the-art gas turbines: technology readiness, potential impact and research challenges
3. Toqan, Majed, et al. "Can-annular combustor with premixed tangential fuel-air nozzles for use on gas turbine engines." U.S. Patent No. 9,181,812. 10 Nov. 2015.
4. Toqan, Majed, et al. "Tangential and flameless annular combustor for use on gas turbine engines." U.S. Patent No. 9,091,446. 28 Jul. 2015.
5. Toqan, Majed, et al. "Tangential annular combustor with premixed fuel and air for use on gas turbine engines." U.S. Patent No. 9,052,114. 9 Jun. 2015.
6. Toqan, Majed, et al. "Tangential combustor with vaneless turbine for use on gas turbine engines." U.S. Patent No. 8,904,799. 9 Dec. 2014.
7. Toqan, Majed, et al. "Can-annular combustor with staged and tangential fuel-air nozzles for use on gas turbine engines." U.S. Patent No. 8,739,511. 3 Jun. 2014.
8. Gregory P. Smith, David M. Golden, Michael Frenklach, Nigel W. Moriarty, Boris Eiteneer, Mikhail Goldenberg, C. Thomas Bowman, Ronald K. Hanson, Soonho Song, William C. Gardiner, Jr., Vitali V. Lissianski, and Zhiwei Qin http://www.me.berkeley.edu/gri_mech/
9. Han, Wang & Dai, Peng & Gou, Xiaolong & Chen, Zheng. (2020). A review of laminar flame speeds of hydrogen and syngas measured from propagating spherical flames. 1-4. 100008. 10.1016/j.jaecs.2020.100008.
10. Bancalari, Ed & Chan, Pedy & Diakunchak, Ihor. (2007). Advanced Hydrogen Gas Turbine Development Program. 10.1115/GT2007-27869.
11. Brower, Marissa & Mathieu, Olivier & Petersen, Eric & Donohoe, Nicola & Heufer, Alexander & Metcalfe, Wayne & Curran, H.J. & Bourque, Gilles & Güthe, Felix. (2013). Ignition Delay Time Experiments for Natural Gas/Hydrogen Blends at Elevated Pressures. Proceedings of the ASME Turbo Expo. 1. 10.1115/GT2013-95151.
12. Ditaranto, Mario & Li, Hailong & Løvås, Terese. (2015). Concept of hydrogen fired gas turbine cycle with exhaust gas recirculation: Assessment of combustion and emissions performance. International Journal of Greenhouse Gas Control. 37. 0.1016/j.ijggc.2015.04.004.
13. Akbari, A. & Hill, S. & Mcdonell, Vincent & Samuelsen, S.. (2011). Experimental and computational analyses of methane and hydrogen mixing in a model premixer. ASME J. Eng. Gas Turbines Power. 131.
14. Shaffer, Brendan & Duan, Zhixuan & Mcdonell, Vincent. (2012). Study of Fuel Composition Effects on Flashback Using a Confined Jet Flame Burner. Journal of Engineering for Gas Turbines and Power. 135. 10.1115/GT2012-69357.
15. Beerer, David & Mcdonell, Vincent & Therkelsen, Peter & Cheng, Robert. (2013). Flashback and Turbulent Flame Speed Measurements in Hydrogen/Methane Flames Stabilized by a Low-Swirl Injector at Elevated Pressures and Temperatures. Journal of Engineering for Gas Turbines and Power. 136. 031502. 10.1115/1.4025636.
16. Lee, Howard & Hernandez, Steve & Mcdonell, Vincent & Steinthorsson, Erlendur & Mansour, Adel & Hollon, Brian. (2009). Development of Flashback Resistant Low-Emission Micro-Mixing Fuel Injector for 100% Hydrogen and Syngas Fuels. 10.1115/GT2009-59502.
17. Beerer, D. & Mcdonell, Vincent. (2008). Autoignition of Hydrogen and Air Inside a Continuous Flow Reactor With Application to Lean Premixed Combustion. Journal of Engineering for Gas Turbines and Power-transactions of The Asme - J ENG GAS TURB POWER-T ASME. 130. 10.1115/1.2939007.

The disclosure of these publications is incorporated by reference.

## Claims

1. Gas turbine whereby hydrogen is used as a primary fuel to generate the energy needed to drive the rotation of the turbine via a set of hydrogen and air nozzles.

2. Gas turbine according to claim 1,
wherein the hydrogen in claim one is introduced into the combustor through a set of nozzles to mix with the combustion air upstream of the combustion chamber.

3. Gas turbine according to one of the claims 1 or 2,
wherein the set of the premix nozzles of hydrogen and air has no swirlers or a set of low swirling devices.

4. Gas turbine according to one of the preceding claims,
wherein said nozzles are oriented tangentially around the combustion chamber to generate a set vortex that mixes the streams from the set nozzles quickly and achieve very fast combustion and uniform conditions at the exit of the combustion chamber.

5. Gas turbine according to one of the preceding claims,
wherein the tangential arrangement of said of nozzles minimize combustion instabilities, thermos-acoustics instabilities and combustor pulsations.

6. Gas turbine according to one of the preceding claims,
wherein the equivalence ratio of hydrogen air can be varied from 0.5 to 3 in said nozzles.

7. Gas turbine according to one of the preceding claims,
wherein in the case where the equivalence ratio is greater than 1, a second set nozzles of combustion air are introduced down stream of said nozzles of premix hydrogen air nozzles.

8. Gas turbine according to one of the preceding claims,
wherein the second set of air nozzles are oriented tangentially downstream of hydrogen/air nozzles.

9. Gas turbine according to one of the preceding claims, Wherein an additive is added to hydrogen prior to its introduction into the air stream in order to achieve a more uniform mixture of hydrogen and the air stream.

10. Gas turbine according to one of the preceding claims,
wherein the used additive is of a chemical that reduces the flame speed of hydrogen and increases the ignition delay time of hydrogen.

11. Gas turbine according to one of the preceding claims,
wherein the ratio of the additive to hydrogen can be varied over the load range of the engine.

12. Gas turbine according to one of the preceding claims,
wherein one option is to have lower additive/ hydrogen ratio at low loads and higher ratios at higher engine loads.

13. Gas turbine according to one of the preceding claims,
wherein the additive is steam.

14. Gas turbine according to claim 13, wherein the steam source can be from the lower end of the cycle where steam is generated from the waste heat released from the exhaust of the turbine.

15. Gas turbine according to claim 13,
wherein the steam is source comes from the lower end of the cycle in a combined cycle power plant (CCPP) application.

16. Gas turbine according to claim 13, wherein the steam can come from an external source of steam to be supplied to the engine.

17. Gas turbine according to claim 13,
wherein the added steam is used to regulate and control the peak combustion temperatures in the combustion chamber so as to minimize and reduce NOx emission levels.
